# EUROPÄISCHE PATENTSCHRIFT

(11) **EP 3 674 568 B1**
(45) Veröffentlichungstag und Bekanntmachung des Hinweises auf die Patenterteilung: **14.04.2021**
(21) Anmeldenummer: 19218024.8
(22) Anmeldetag: 19.12.2019
(51) Int. Cl.: F16B 7/18, E04B 2/78, E05D 7/12, E05D 5/02, F16B 37/04, E05B 15/02

(54) **BESCHLAG FÜR EIN TRENNWANDSYSTEM, INSBESONDERE FÜR GLASTRENNWÄNDE**
FITTING FOR A PARTITION WALL SYSTEM, ESPECIALLY FOR GLASS PARTITIONS
FERRURE POUR UN SYSTÈME DE CLOISONS, EN PARTICULIER POUR CLOISONS EN VERRE

(30) Priorität: 28.12.2018 DE 102018133665
(43) Veröffentlichungstag der Anmeldung: 01.07.2020
(73) Patentinhaber: Längle Holding GmbH, 6840 Götzis (AT)
(72) Erfinder: LÄNGLE, Oswin, 6840 Götzis (AT)
(74) Vertreter: Riebling, Peter

(56) Entgegenhaltungen:
- DE-A1- 2 436 844
- DE-U1- 29 907 628
- GB-A- 2 177 153

## Beschreibung

Die Erfindung betrifft einen Beschlag mit mindestens einem Nutenstein für ein Trennwandsystem, insbesondere für Glastrennwände, nach dem Oberbegriff des Patentanspruchs 1.

Wenn in der folgenden Beschreibung von Glastrennwänden die Rede ist, so ist dies nicht einschränkend zu verstehen. In der folgenden Beschreibung wir als bevorzugtes Beispiel ein Glasfüllelement zwischen Profilstäben beschrieben, obwohl die Erfindung hierauf nicht beschränkt ist. Als Füllplatte oder Füllelement für profilstabartige Zusammenbauten können auch aus Kunststoff bestehende Füllplatten oder Doppelplatten vorhanden sein, sowie Platten aus andern Materialien, wie z. B. aus Holz oder Metall oder entsprechenden Verbundstoffen.

In der vorliegenden Beschreibung wird insbesondere von einer trocken verglasten Profilzarge ausgegangen, welche durch seine Vielseitigkeit und einfache Konfektionierung, sowie durch seine einfache Montage wesentliche Vorteile gegenüber dem Stand der Technik entfaltet.

Mit dem Gegenstand der DE 201 03 457 U1 ist ein Nutenstein mit Doppelfunktion für Profilstäbe bekannt geworden, um Profilstäbe miteinander zu verbinden. Der Nutenstein ist geeignet, an zwei verschiedenen Profilen mit unterschiedlichen Nutenbreiten verwendet zu werden. In dieser Druckschrift ist es nicht beschrieben, dass Beschlagteile mit einem solchen Nutenstein in unterschiedlichen Montagesituationen eingesetzt werden könnten.

Der dort gezeigte Nutenstein zeichnet sich durch Anformungen von zwei unterschiedlich breiten Rücken aus, so dass er in Nuten unterschiedlicher Breite eingesetzt werden kann. Dies hat nichts mit einem Glastrennwandsystem zu tun, bei dem ein Türband stufenlos höhenverstellbar ohne Bohrungen eingesetzt werden kann und unterschiedliche Rahmenprofile für Glas/Glas und Glas/Wand verwendbar sind

Die DE 24 36 844 A1 offenbart ein Beschlag nach den Oberbegriff des Anspruchs 1.

Der Erfindung liegt die Aufgabe zugrunde, einen Beschlag mit mindestens einem Nutenstein für ein Trennwandsystem, insbesondere für Glastrennwände, so weiterzubilden, dass ohne Bohrungen im Profilstab unterschiedliche Glasstärken montiert werden können und ein automatischer Ausgleich bei der Montage unterschiedlich dicker Füllplatten möglich ist.

Zur Lösung der gestellten Aufgabe ist die Erfindung durch die technische Lehre des Patentanspruchs 1 gekennzeichnet.

Bevorzugte Ausgestaltungen der Erfindung sind in den Unteransprüchen angegeben.

Erfindungsgemäß wird zur Befestigung des Beschlages mindestens ein Nutenstein vorgeschlagen, der in vier verschiedenen Einbaulagen in die Profillängsnut einsetzbar und darin festlegbar ist, wobei der Beschlag je nach Einbaulage des Nutensteins in verschiedenen Einbaupositionen und/oder für den Einbau unterschiedlich dicker Trennwände an der Profilzarge befestigt werden kann.

Ein bevorzugtes Merkmal der Erfindung ist, dass nunmehr ein Montagesystem vorgeschlagen wird, welches im Wesentlichen mit vertikalen Profilzargen arbeitet, in denen jeweils eine in vertikaler Richtung gerichtete Profillängsnut eingearbeitet ist, wobei die Profillängsnut über die gesamte Länge der Profilzarge eine gleichmäßige Breite und Tiefe aufweist, und dass in diese Profillängsnut mindestens ein Nutenstein in vier verschiedene Einbaulagen einsetzbar und festsetzbar sind.

Erfindungsgemäß wird in einer ersten Einbaulage H1 des Nutensteines ein Linksanschlag des Beschlages erreicht, wobei in dieser ersten Einbaulage H1 eine Trennwand mit einer ersten Dicke, z.B. 10 mm, verwendet werden kann.

Eine zweite Einbaulage H2 des Nutensteines ermöglicht einen Rechtsanschlag des Beschlages und die Verwendung einer Trennwand, die wiederum die erste Dicke aufweist.

In einer dritten Einbaulage H3 des Nutensteines wird ein Linksanschlag des Beschlages erreicht, wobei in dieser dritten Einbaulage H3 eine Trennwand mit einer zweiten Dicke, z.B. 12 mm, verwendet werden kann.

Eine vierte Einbaulage H4 des Nutensteines ermöglicht einen Rechtsanschlag des Beschlages und die Verwendung einer Trennwand mit wiederum der zweiten Dicke.

Eine Anschraubbohrung im Nutenstein ist bezüglich der Längsmittelachse des Nutensteins exzentrisch versetzt angeordnet und weist auf einer Seite eine Ansenkung auf.

In der ersten Einbaulage H1 des Nutensteins befindet sich die exzentrische Anschraubbohrung in einer oberen Lage und die Ansenkung der Anschraubbohrung ist sichtbar.

Durch eine Drehung des Nutensteins um 180° um eine zentrische Mittenachse ist der Nutenstein von der ersten Einbaulage H1 in die zweite Einbaulage H2 überführbar, wodurch die exzentrische Anschraubbohrung von der oberen Lage in eine untere Lage gelangt.

Der Nutenstein ist durch Wenden um 180° um seine Längsachse von der ersten Einbaulage H1 in die dritte Einbaulage H3 überführbar, wobei sich die exzentrische Anschraubbohrung in der oberen Lage befindet und die Ansenkung der exzentrischen Anschraubbohrung nicht sichtbar ist.

Der Nutenstein ist durch eine Drehung um 180° um die zentrische Mittenachse von der dritten Einbaulage H3 in die vierte Einbaulage H4 überführbar, wodurch die exzentrische Anschraubbohrung von der oberen Lage in eine untere Lage gelangt und die Ansenkung der Anschraubbohrung nicht sichtbar ist.

Aufgrund der verschiedenen Einbaulagen des Nutensteins besteht der Vorteil der schnellen Montage von Glastrennwänden unterschiedlicher Dicke, wobei in einem bevorzugten Ausführungsbeispiel lediglich beschrieben wird, dass Glasstärken von 10 mm und 12 mm automatisch ausgeglichen werden können, je nach Einbaulage des Nutensteins. Unter "automatischer Ausgleich" wird verstanden, dass je nach der Dicke der verwendeten Glasplatte der Mittelpunkt der Glasplatte mit dem eingebauten Beschlag sich in Richtung auf die Rahmenseite und die dort angeordnete Schließvorrichtung verschiebt und so ein gleichmäßiger Dichtungsdruck auf die rahmenseitig angeordnete Abdichtung gegeben ist, ohne dass sich ein unerwünschter Spalt bildet.

Bisher war es lediglich bekannt, in vorhandenen Profilzargensystemen ein Befestigungsloch für einen Beschlag um einen gewissen Ausgleichsabstand von z.B. 2 mm zu bohren, um dann dort den Beschlag festzulegen, was bei der Erfindung vermieden wird, weil die Festlegung mit in der Profilzarge verschiebbaren und festlegbaren Nutensteinen erfolgt, und die Nutensteine für insgesamt vier unterschiedliche Einbaulagen eingerichtet sind.

Ein weiterer Vorteil des Profilstabsystems mit eingebauten Nutensteinen ist, dass in einfacher Weise ein Höhenausgleich stattfinden kann, denn zum Zweck eines Höhenausgleiches müssen lediglich alle Nutensteine auf eine Befestigungsseite des Beschlages gelöst und der Beschlag entsprechend in vertikaler Richtung verschoben werden, um danach wieder festgelegt zu werden. Dies war bei den bisherigen Profilstabsystemen nur durch Anbringung neuer Bohrungen möglich. Insbesondere wenn es um den Ausgleich geringer Höhenunterschiede ging, war es praktisch unmöglich, solche Ausgleichsbohrungen anzubringen, weil die Bohrungen sich nur um einen Abstand von z. B. 2 mm unterschieden und dadurch ineinander verliefen, wodurch eine Festlegung des Türflügels mit dem Beschlag an der Rahmenseite nicht mehr möglich war.

Nach einem weiteren Merkmal der Erfindung ist es vorgesehen, dass mit der gleichen Nutensteinbefestigung, die für insgesamt vier unterschiedliche Einbaulagen geeignet ist, auch eine rahmenseitige Schließvorrichtung, insbesondere ein Schließblech, in unterschiedlichen Höhen positioniert und festgelegt werden kann.

Statt eines rahmenseitigen Schließbleches können selbstverständlich auch andere rahmenseitige Befestigungen mit dem erfindungsgemäßen Nutenstein festgelegt werden, wie z. B. Sensoren, Anschlagstopper, Dämpfungseinrichtungen und dergleichen mehr.

In einer bevorzugten Ausgestaltung der vorliegenden Erfindung werden Ein-Zapfen-Beschläge verwendet, die im Wesentlichen aus einer Grundplatte bestehen, die eine vertikale Drehachse ausbildet, in welcher ein Scharnierarm drehbar gelagert ist. Am Scharnierarm ist eine Klemmplatte befestigt, wobei im Zwischenraum zwischen dem Scharnierarm und der Klemmplatte eine Füllplatte, insbesondere die Glasplatte, aufgenommen ist.

Die Glasplatte wird dabei im Zwischenraum zwischen dem Scharnierarm und der Klemmplatte vorzugsweise durch Befestigungsschrauben festgelegt, die durch die einander gegenüber liegenden Platten des Scharnierarms und der Klemmplatte hindurchgreifen.

Selbstverständlich ist die vorliegende Erfindung nicht auf einen Ein-Zapfen-Schwenkbeschlag beschränkt, es können auch beliebige andere Drehbeschläge verwendet werden, wie z. B. Topfscharniere oder 180°-Schwenkscharniere. Alle genannten Beschläge können auch zugeordnete Dämpfungseinrichtungen aufweisen oder auch Rückholeinrichtungen, die unter Federlast die offene Tür in eine Schließstellung bringen.

Mit dem beschriebenen Befestigungssystem lassen sich auch Scharnierband-Beschläge einbauen, die insbesondere für Holztürfüllungen verwendet werden.

Aufgrund der besagten vier möglichen Einbaulagen des Nutensteins ergibt sich eine einfache Lösung zum Wechsel von einem Linksanschlag eines Türblattes auf einen Rechtsanschlag, weil in diesem Fall nur Nutensteine, welche die zugehörigen Beschläge auf der einen Rahmenseite festlegen, herausgenommen werden, auf der gegenüber liegenden Rahmenseite eingesetzt werden und dann ein Türblatt von einem Links- auf einen Rechtsanschlag umgewandelt wurde, was bisher nicht bekannt war.

Die Erfindung ist nicht auf die Verwendung von Glasstärken von z. B. 10 mm und 12 mm beschränkt, sondern es können durch entsprechende Ausbildung der Beschläge und Nutensteine auch Glasstärken im Bereich zwischen 20 bis 28 mm verwendet werden, wobei die gleiche Beschlagtechnik, wie oben beschrieben, verwendet wird.

Bei der Befestigung von Holztürblättern mit dem Montagesystem in Verbindung mit Profilzargen wird dabei beispielhaft von einer Dicke der Holztürblätter von 40 mm ausgegangen.

Ein weiteres bevorzugtes Merkmal der Erfindung ist, dass in dem erfindungsgemäßen Nutenstein nunmehr eine exzentrische Anschraubbohrung angeordnet ist, die bezüglich der Längsmittenachse des Nutzensteins exzentrisch versetzt ist. Durch Drehung des Nutensteins um seine zentrische Mittenachse kommt die Anschraubbohrung entweder in einem bestimmten Maß oberhalb oder in einem bestimmten Maß unterhalb der zentrischen Mittenachse zu liegen, so dass es bei der besagten Rotation oder Drehung des Nutensteins zu einer Verschiebung der Position der Anschraubbohrung kommt, und die damit zu befestigende Füllplatte in Richtung auf die Anschlagseite des Rahmenprofils verschoben wird.

Weiteres bevorzugtes Merkmal ist, dass der Nutenstein im Aufbau eine zentrische Mittenplatte aufweist, die über die gesamte Länge eine einheitliche Dicke aufweist und dass an der Vorder- und Rückseite dieser Mittenplatte jeweils eine zugeordnete Anschlagplatte angeformt ist, die spezielle Eigenschaften aufweisen.

Die exzentrische Anschraubbohrung durchsetzt hierbei die Mittenplatte und die Anschlagplatten.

Nach einem weiteren bevorzugten Merkmal der Erfindung ist es vorgesehen, dass der Nutenstein in seiner vertikalen Montagelage in die Profilnut einsetzbar und dort durch eine Drehbewegung in seiner horizontalen Montagelage verriegelbar ist, weil die oberen und unteren Stirnseiten der zentrischen Mittelplatte geeignete Bogenflächen ausbilden, die es ermöglichen, dass der Nutenstein in die Profilnut in Längsrichtung eingesetzt werden kann und im Uhrzeigersinn gedreht wird, wobei sich die Bogenflächen an der Profilzarge anlegen und verklemmen.

Nach einem weiteren bevorzugten Merkmal sind an den an der Mittenplatte angeformten Anschlagplatten ebenfalls Bogenflächen angeformt, die dafür sorgen, dass der Nutenstein bei einer Montage nur in einer Richtung gedreht und dadurch festgelegt werden kann. Diese Bogenflächen der Anschlagplatten ermöglichen eine Drehung des Nutensteins in der Profilnut um 90°, um so aufgrund der Bogenflächen, die an den Stirnseiten der Anschlagplatten angeordnet sind, eine Drehlagenfixierung des Nutensteins in der Profillängsnut zu erlauben, so dass sich dieser nicht weiter drehen kann. Damit sind diese Bogenflächen an den Anschlagflächen dazu geeignet, um nur eine Drehung des Nutensteins um 90° von seiner vertikalen Einbaulage in seine um 90° gedrehte Montagelage zu ermöglichen, jedoch keine Drehung über diese Einbaulage hinaus.

Dabei wird es bevorzugt, wenn die Drehung des Nutensteins durch eine Befestigungsschraube erfolgt, welche durch die exzentrische Anschraubbohrung des Nutensteins hindurchgreift und dort mit reibungserhöhenden Mitteln festlegbar ist. Beispielsweise kann auf dem Bolzengewinde der Befestigungsschraube ein reibungserhöhender Belag aufgebracht werden, der z. B. aus einer Kunststoffhülse, einem aushärtbaren Lack oder dergleichen besteht, so dass eine reibungserhöhte Schraubverbindung zwischen der Befestigungsschraube der Anschraubbohrung besteht, so dass beim Drehen der Befestigungsschraube im Uhrzeigersinn zwecks Festlegung des Nutensteins in der Profillängsnut der Nutenstein gleichzeitig um 90° mitgenommen wird und dann somit automatisch in seine Montagelage gerät.

Vorteilhaft ist auch die freien Flächen der Vorderseite und der Rückseite der Mittenplatte des Nutensteins zumindest teilweise mit reibungserhöhenden Strukturen und/oder einem reibungserhöhenden Belag versehen. Bei der Montage des Beschlages werden diese mit reibungserhöhenden Mitteln versehenen Flächen der Mittenplatte an entsprechende Flächen der Profilzarge gepresst und dadurch unverschiebbar festgelegt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisierte Explosionszeichnung der Montage eines Beschlages an einer Profilzarge,
- Tabelle 1:: Zuordnung von zwei unterschiedlichen Glasdicken und Einbaulagen des Beschlages bezüglich der Einbaulage des Nutensteins,
- Figur 2a-2d:: Darstellung der vier verschiedenen Einbaulagen des Nutensteins,
- Figur 3a, 3b:: die zwei Seitenansichten des Nutensteins,
- Figur 5a:: Schnitt durch den Nutenstein entlang der Linie A-A in Figur 6a
- Figur 5b:: Schnitt durch den Nutenstein entlang der Linie B-B in Figur 6a,
- Figur 6a:: die Ansicht der Rückseite des Nutensteins,
- Figur 6b:: die Ansicht der Vorderseite des Nutensteins,

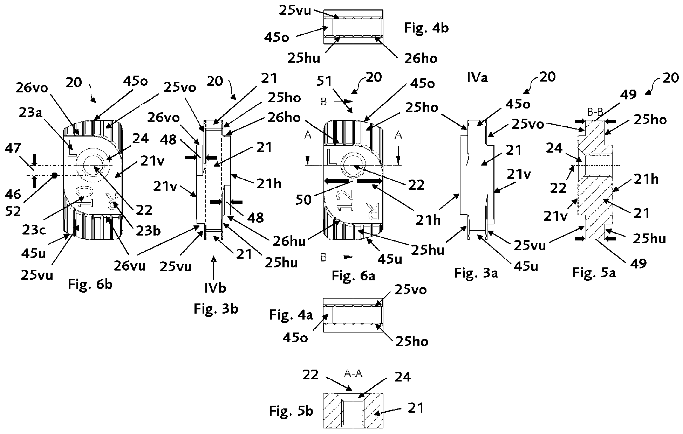

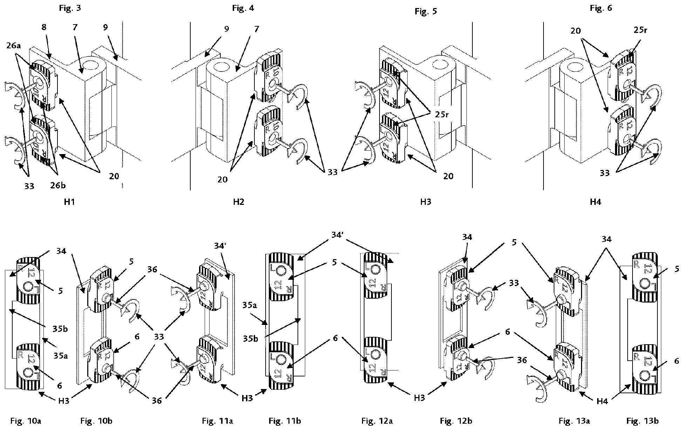

- Figur 3:: die Einbaulage H1 von Nutensteinen an einem Beschlag,
- Figur 4, 4a, 4b:: die Einbaulage H2 von Nutensteinen an einem Beschlag,
- Figur 5:: die Einbaulage H3 von Nutensteinen an einem Beschlag,
- Figur 6:: die Einbaulage H4 von Nutensteinen an einem Beschlag,

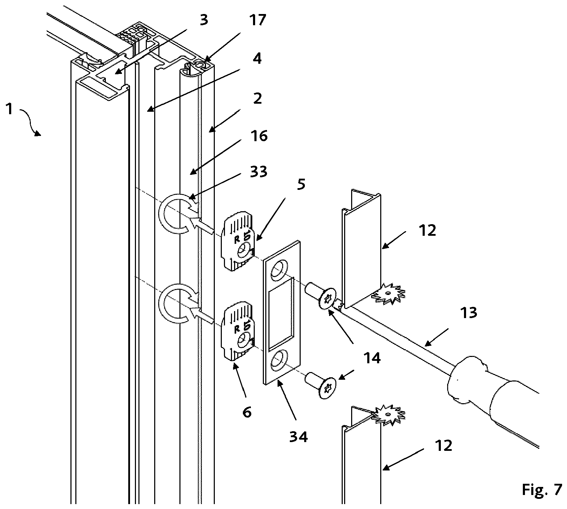

- Figur 7:: eine explosionsartige Darstellung der Befestigung eines Schließbleches mit den erfindungsgemäßen Nutensteinen an einer Rahmenseite,

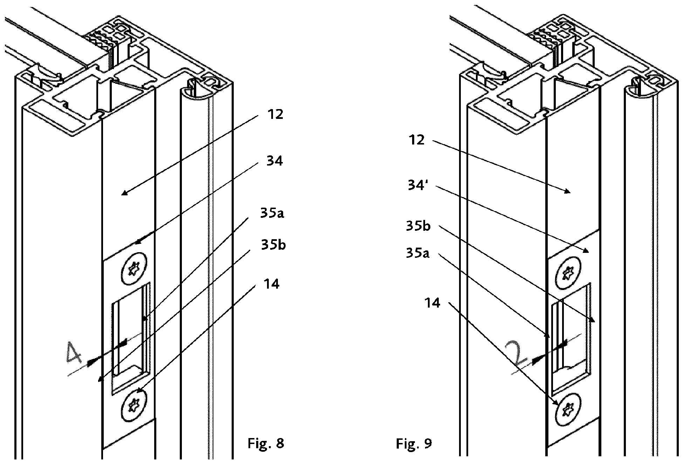

- Figur 8:: eine erste Montagelage des Schließbleches, z. B. für die Montage als Linksanschlag einer Tür,
- Figur 9:: das um 180° gedrehte, gleiche Schließblech für einen Rechtsanschlag des gleichen Türblattes,
- Figur 10a, Figur 10b:: unterschiedliche Darstellungen für den Einbau des Schließbleches in Verbindung mit den Nutensteinen in der Einbaulage H4,
- Figur 11a, Figur 11b:: eine veränderte Montagesituation des Schließbleches mit Nutensteinen in der Einbaulage H3,
- Figur 12a, Figur 12b:: die Einbaulage H3 der Nutzensteine zur Befestigung des Schließbleches,
- Figur 13a, Figur 13b:: die Einbaulage H4 der Nutensteine zur Befestigung des Schließbleches

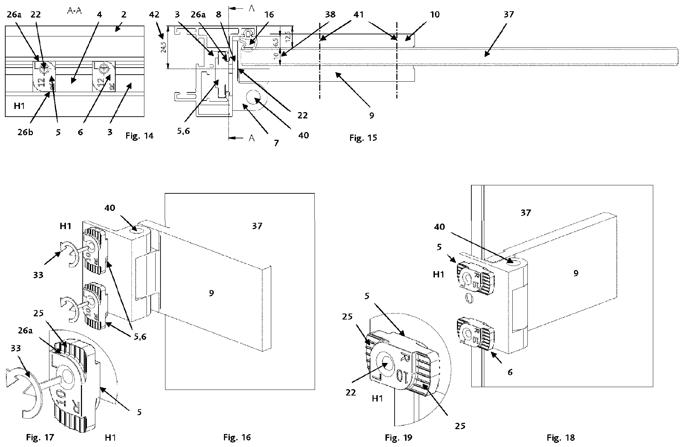

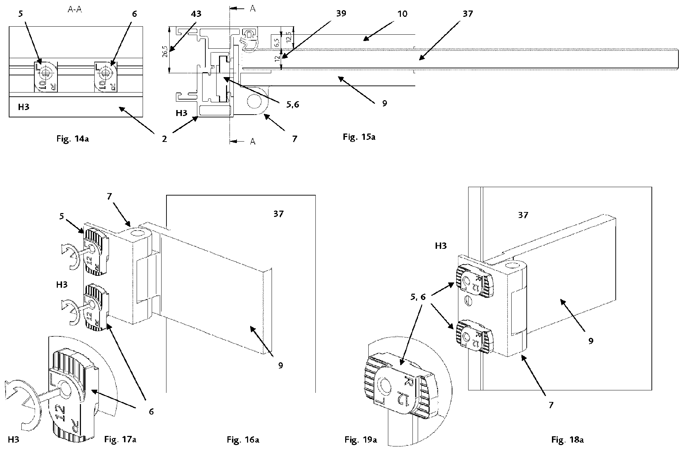

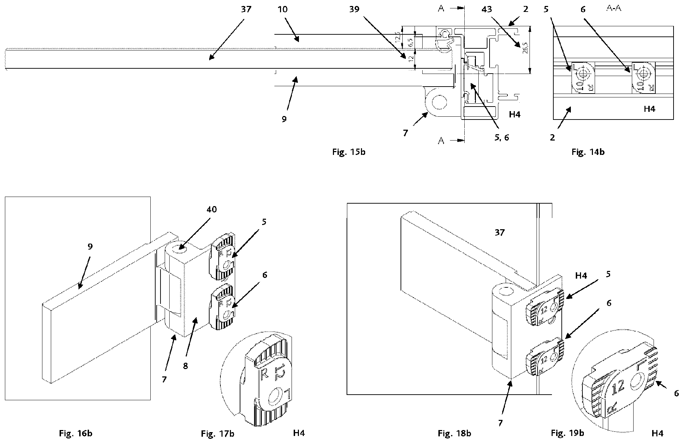

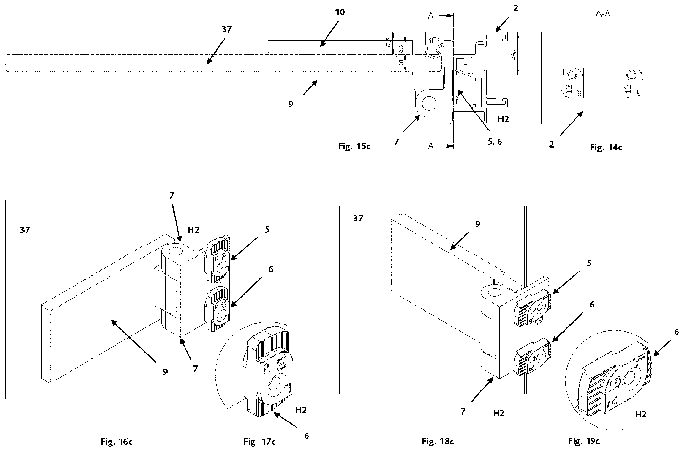

- Figur 14:: Einbaulage der Nutensteine in der Lage H1 als Schnitt entlang der Linie A-A in Figur 15,
- Figur 15:: ein Schnitt durch die Anordnung mit einer Glasscheibe mit einer Dicke von 10 mm in der Einbaulage H1 der Nutensteine,
- Figur 16:: perspektivische Darstellung der Befestigung des Beschlages in der Einbaulage H1 der Nutensteine,
- Figur 17:: die vergrößerte perspektivische Darstellung eines Nutensteins in Einbaulage H1,
- Figur 18:: die perspektivische Darstellung der Beschlagbefestigung der Einbaulage H1 der verriegelten Nutensteine,
- Figur 19: vergrößerte perspektivische Ansicht des Nutensteins in verriegelter Stellung und der Einbaulage H1,
- Figur 14a:: Einbaulage der Nutensteine in der Lage H3 als Schnitt entlang der Linie A-A in Figur 15a,
- Figur 15a:: der Schnitt durch die gesamte Anordnung in der Einbaulage H3 der Nutensteine mit einer 12 mm dicken Glasscheibe,
- Figur 16a:: eine perspektivische Darstellung der Befestigung des Beschlages in der Einbaulage H3 der Nutensteine,
- Figur 17a:: die vergrößerte perspektivische Darstellung eines Nutensteins in Einbaulage H3,
- Figur 18a:: eine perspektivische Darstellung der Beschlagbefestigung der Einbaulage H3 der verriegelten Nutensteine,
- Figur 19a: eine vergrößerte perspektivische Ansicht des Nutensteins in verriegelter Stellung und der Einbaulage H3,
- Figur 14b:: Einbaulage der Nutensteine in der Lage H4 als Schnitt entlang der Linie A-A in Figur 15b,
- Figur 15b:: einen Schnitt durch die gesamte Anordnung in der Einbaulage H4 der Nutensteine mit einer 12 mm dicken Glasscheibe,
- Figur 16b:: eine perspektivische Darstellung der Befestigung des Beschlages in der Einbaulage H4 der Nutensteine,
- Figur 17b:: die vergrößerte perspektivische Darstellung eines Nutensteins in Einbaulage H4,
- Figur 18b:: die perspektivische Darstellung der Beschlagbefestigung der Einbaulage H4 der verriegelten Nutensteine,
- Figur 19b: eine vergrößerte perspektivische Ansicht des Nutensteins in verriegelter Stellung und der Einbaulage H4,
- Figur 14c:: Einbaulage der Nutensteine in der Lage H2 als Schnitt entlang der Linie A-A in Figur 15c,
- Figur 15c:: der Schnitt durch die gesamte Anordnung in der Einbaulage H3 der Nutensteine mit einer 10 mm dicken Glasscheibe,
- Figur 16c:: perspektivische Darstellung der Befestigung des Beschlages in der Einbaulage H2 der Nutensteine,
- Figur 17c:: die vergrößerte perspektivische Darstellung eines Nutensteins in Einbaulage H2,
- Figur 18c:: die perspektivische Darstellung der Beschlagbefestigung der Einbaulage H2 der verriegelten Nutensteine,
- Figur 19c: vergrößerte perspektivische Ansicht des Nutensteins in verriegelter Stellung und der Einbaulage H2,

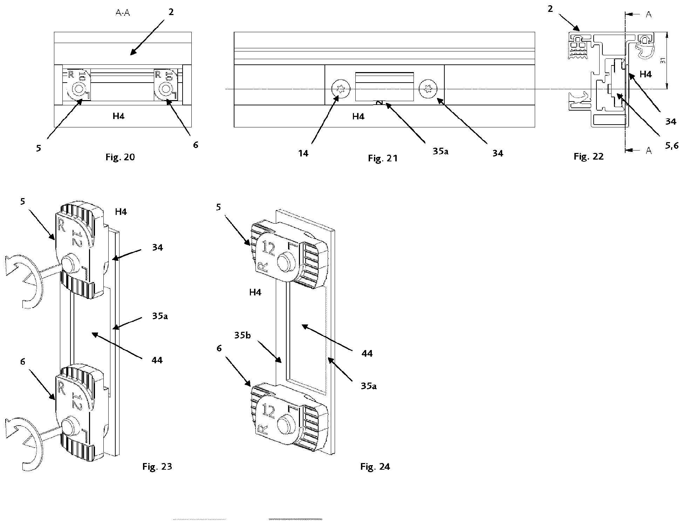

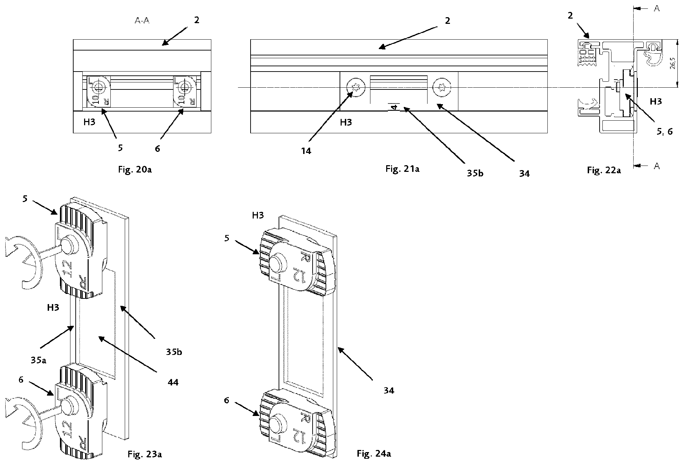

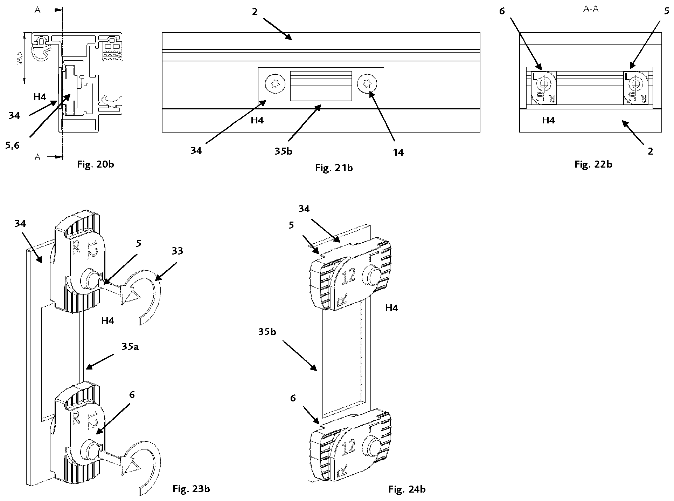

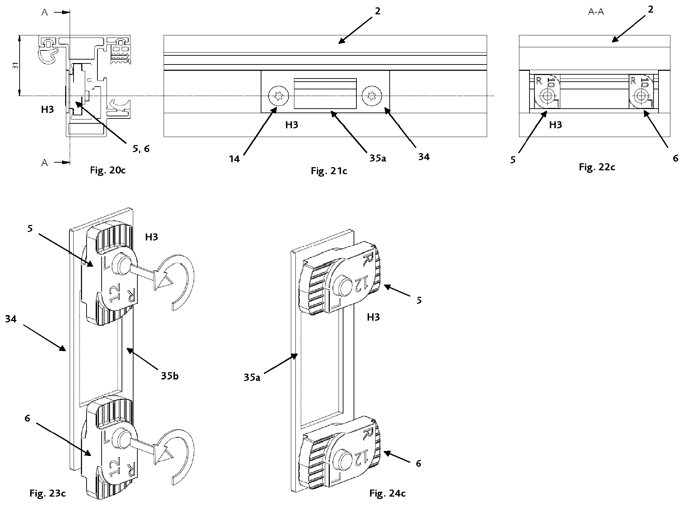

- Figur 20:: Schnitt gemäß der Linie A-A in Figur 22 gemäß der Einbaulage H4 der Nutensteine,
- Figur 21:: Draufsicht auf ein Schließblech in der Einbaulage H4 der Nutensteine
- Figur 22, 22a:: Querschnitt durch das Rahmenprofil mit Schließblech in der Einbaulage H4 der Nutensteine,
- Figur 23:: perspektivische Ansicht Schließbleches mit unverriegelten Nutensteinen in der Einbaulage H4,
- Figur 24:: perspektivische Darstellung des festgelegten Schließbleches in der Klemmstellung der Nutensteine in der Einbaulage H4,
- Figur 20a:: Schnitt gemäß der Linie A-A durch die Anordnung nach Figur 22a in der Einbaulage H3 für ein Schließblech,
- Figur 21a:: die Draufsicht auf das Schließblech in der Einbaulage H3 der Nutensteine,
- Figur 23a:: die perspektivische Seitenansicht des Schließbleches in der Einbaulage H3 der Nutensteine vor der Festlegung,
- Figur 24a:: die perspektivische Darstellung des Schließbleches in der Einbaulage H3 in der Klemmstellung der Nutensteine,
- Figur 20b:: einen Querschnitt einer Anordnung für die Festlegung eines Schließbleches in der Einbaulage H4 der Nutensteine,
- Figur 21b:: die Draufsicht auf das Schließblech in der Einbaulage H4 der Nutensteine,
- Figur 22b:: Schnitt durch die Anordnung nach Figur 20b entlang der Linie A-A,
- Figur 23b:: die Festlegung des Schließbleches in der Einbaulage H4 vor der Festlegung der Nutensteine
- Figur 24b:: die Klemmstellung des Schließbleches nach der Montage gemäß Figur 23b in der Einbaulage H4,
- Figur 20c:: einen Querschnitt einer Anordnung für die Festlegung eines Schließbleches in der Einbaulage H3 der Nutensteine,
- Figur 21c:: die Draufsicht auf das Schließblech in der Einbaulage H3
- Figur 22c:: der Schnitt gemäß der Linie A-A in Figur 20c in der Einbaulage H3,
- Figur 23c:: die perspektivische Darstellung des Schließbleches vor der Festlegung in der Einbaulage H3,
- Figur 24c:: die Klemmstellung des Schließbleches in der Einbaulage H3

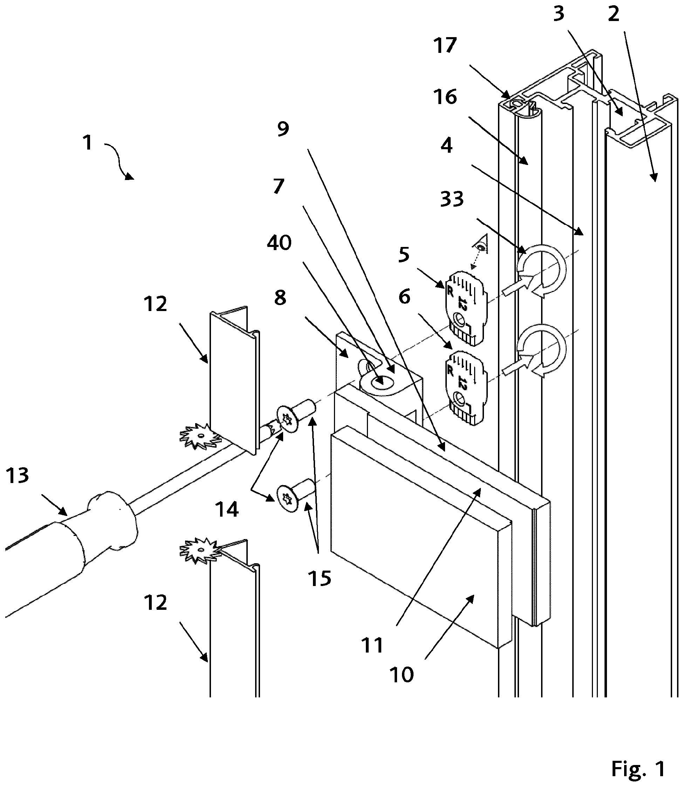

In Figur 1 ist ein Montagesystem 1 dargestellt, welches eine in vertikaler Richtung verlaufenden Profilzarge 2 umfasst, die bevorzugt aus einem extrudierten Aluminiumprofil besteht, in dem eine gleichmäßig sich über die Länge erstreckende Profillängsnut 3 eingearbeitet ist, die zur Aufnahme von mehreren hintereinander liegenden und einen gegenseitigen Abstand zueinander einnehmenden Nutensteinen 5, 6 geeignet ist.

Mit Hilfe dieser Nutensteine 5, 6 kann z.B. ein Scharnierbeschlag befestigt werden, der im gezeigten Ausführungsbeispiel aus der Grundplatte 8 besteht, in der eine Anzahl von Bohrungen angeordnet sind, welche Anschraubbohrungen mit Befestigungsschrauben 14 durchsetzt sind, die ihrerseits in die zugeordneten Anschraubbohrungen 22 der Nutensteine 5, 6 eingeschraubt werden.

Die Befestigungsschrauben 14 weisen jeweils Schraubbolzen auf, die bevorzugt mit einem Reibungsbelag 15, z. B. mit einem aushärtbaren Lack beschichtet sind, so dass beim Ansetzen eines Werkzeuges 13 an der Befestigungsschraube 14 und Drehung in Schraubrichtung 33 eine Mitnahme des Nutensteines 5, 6 im Uhrzeigersinn erfolgt, so dass sich der Nutenstein 5, 6 automatisch von seiner Längsrichtung - wie in Figur 1 gezeigt - in seine in Querrichtung gerichtete Klemmlage in der Profillängsnut 3 ausrichtet und dort verdrehgesichert angelegt ist.

Eine weitere Drehung des Nutensteins um mehr als 90° in Drehrichtung 33 ist nicht möglich, da aufgrund der besonderen Konstruktion des Nutensteins dieser innerhalb der Profillängsnut 3 lediglich von einer vertikalen Lage - wie in Figur 1 dargestellt - in eine horizontale Querlage drehbar ist und darüber hinaus in Drehrichtung 33 nicht weitergedreht werden kann.

Der Beschlag 7 wird mit den Nutensteinen 5, 6 in der Profillängsnut 3 festgelegt, wobei es nicht notwendig ist, dass die Nutensteine 5, 6 in den Einführschlitz 4 von oben her eingeführt werden, sondern sie können aufgrund ihrer geringeren Breite als der Einführschlitz 4 der Profillängsnut in ihrer dargestellten vertikalen Lage durch den Einführschlitz 4 in die Profillängsnut 3 eingeführt und in der Profillängsnut 3 gedreht werden.

Der Beschlag 7 ist als Scharnier ausgebildet und umfasst eine rahmenfeste Grundplatte 8, an der eine Drehachse 40 angeordnet ist, und einen um die Drehachse 40 schwenkbar gelagerten Scharnierarm 9. Parallel zu dem Scharnierarm 9 ist eine Klemmplatte 10 vorgesehen, in deren Klemmspalt 11 eine Füllplatte aufgenommen werden kann, die bevorzugt als Glasplatte 37 ausgebildet ist.

Es ist nicht näher dargestellt, dass im Bereich zwischen dem Scharnierarm 9 und der Klemmplatte 10 Bohrungen vorgesehen sind, die von nicht näher dargestellten Schrauben mit zugeordneten Hülsen durchsetzt sind, um so die Befestigung einer Glasplatte im Bereich des Klemmspaltes 11 zu ermöglichen.

Es können Abdeckprofile 12 verwendet werden, die dazu vorgesehen sind, die Befestigungsseite der Grundplatte 8 abzudecken, um die dort darunter liegenden Befestigungsschrauben 14 zu verdecken.
Ebenso dient das Abdeckprofil 12 dazu, direkt unterhalb der Grundplatte 8 die Profillängsnut 3 blickdicht abzuschließen.
Das symbolisch dargestellte Sägeblatt dient zur Darstellung, dass die verwendeten Abdeckprofile 12 bei Bedarf abgeschnitten werden können.

Zur besseren Abdichtung der Glasplatte kann eine Hohlkammerdichtung 16 in einer zusätzlichen Längsnut 17 der Profilzarge 2 festgelegt sein.

Der Nutenstein 4,5 kann in vier verschiedenen Einbaulagen H1, H2, H3, H4 verwendet werden. Tabelle 1 zeigt die Möglichkeiten der Befestigung eines Schließbleches und eines Türbandes mittels des erfindungsgemäßen Befestigungssystems und die dafür notwendige Einbaulage H1 bis H4 des Nutensteins. Es kann jeweils zwischen einer Glasdicke von 10mm und 12mm ausgewählt werden und einem DIN-Anschlag links bzw. einem DIN-Anschlag rechts.

Für ein zu befestigendes Schließblech 34, 34' gibt es insgesamt vier Montagemöglichkeiten, weil jeweils zwei unterschiedlichen Glasdicken von z. B. 10 und 12 mm kombiniert mit einem DIN-Anschlag links gemäß Montagelage 18 und einem DIN-Anschlag rechts gemäß Montagelage 19 möglich sind. Zum Beispiels ist für eine Trennscheibe mit einer Glasdicke von 12mm und dem Schließblech in Montagelage 18 (DIN Anschlag links) die Einbaulage H3 der Nutensteine 5, 6 erforderlich.

In analoger Weise kann auch für das Türband oder Scharnier 7 zusammen mit einer Glasdicke von 10 oder 12 mm verwendet werden, wobei bei einem DIN-Anschlag links gemäß der Montagelage 18 des Türbandes die Einbaulagen H1 oder H3 der Nutensteine in Abhängigkeit von der verwendeten Glasdicke angewendet werden, während bei einem DIN-Anschlag rechts je nach der verwendeten Glasdicke von 10 oder 12 mm die Einbaulagen H2 und H4 der Nutensteine 5, 6 Anwendung finden.

Bei der Montage der Nutensteine 5, 6 auf der Grundplatte 8, z.B. gemäß Figur 3, ist nur noch die nicht mit der Grundplatte verbundene Seite der Nutensteine 5, 6 sichtbar, so wie es mit dem Augensymbol in Figur 1 symbolisiert ist. Die Einbaulage wird daher durch die Ansicht dieser im Folgenden als Vorderseite des Nutensteins 20 bezeichneten Seite definiert.

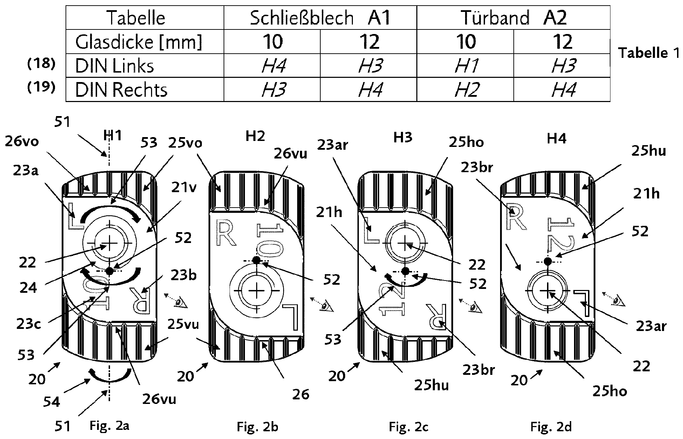

In den Figuren 2a-2d sind die vier möglichen Einbaulagen eines Nutensteins 20 dargestellt. Der Nutenstein 20 entspricht den Nutensteinen 5, 6 in Figur 1 und stellt eine detaillierte Darstellung der Nutensteine 5, 6 dar. Der Nutenstein 20 und dessen Aufbau ist in den Figuren 4a, 4b, 5a, 5b und den Figuren 3a, 3b und 6b näher erläutert.

Am Beispiel der Figur 2a wird die Einbaulage H1 des Nutensteins 20 näher erläutert, wobei wiederum das Augensymbol zur Erkennung der Einbaulage verwendet wird.

In der Einbaulage H1 des Nutensteins 20 ist eine Ansenkung 24 der Anschraubbohrung 22 sichtbar, die lediglich an der Vorderseite des Nutensteins 20 vorhanden ist. Die Anschraubbohrung 22 befindet sich oberhalb der Mittenachse 53 des Nutensteins 20. Zur weiteren Identifizierung dieser Einbaulage H1 dienen außerdem L- oder R-Symbole zur Bezeichnung von "Linksanschlag" und "Rechtsanschlag", die mit den Bezugszeichen 23a und 23b bezeichnet sind, und ferner ein Zahlensymbol 23c, welches unmittelbar die Dicke der in dieser Einbaulage H1 zu verwendenden Glasscheibe von "10" mm angibt.

In der Einbaulage H1 des Nutensteins 20 gemäß Figur 2a ergibt sich daher eine zu montierende Glasdicke von 10 mm, die für Linksanschlag eines Beschlages gemäß dem aufrecht stehend sichtbaren Buchstaben "L" eingebaut werden soll.

Ein Wechsel von der Einbaulage H1 zur Einbaulage H2 des Nutensteins 20 ergibt sich durch eine Rotation des Nutensteins 20 um seine horizontale Mittelachse 52 in Pfeilrichtung 53, wodurch dann gemäß Figur 2b das R-Symbol in aufrechter Lage links oben zu liegen kommt und somit in dieser Einbaulage H2 ein Rechtsanschlag des zu montierenden Beschlages möglich ist. Diese Einbaulage H2 des Nutensteins 20 ist ebenfalls geeignet für die Verwendung einer Glasscheibe 37 mit einer Dicke von 10 mm. Die Anschraubbohrung 22 befindet sich unterhalb der Mittenachse 53 des Nutensteins 20. Die Ansenkung 24 der Anschraubbohrung 22 ist sichtbar.

Eine weitere Einbaulage H3 des Nutensteins 20 ergibt sich dadurch, dass man den Nutenstein 20 ausgehend von der Einbaulage H1 von der Vorderseite auf die Rückseite wendet, indem man ihn in Pfeilrichtung 54 um 180° um eine vertikale Wendeachse 51 dreht. Die Einbaulage H3 des Nutensteins 20 ist für eine zu verwendende Glasdicke von 12 mm geeignet, wobei der Beschlag wiederum mit Linksanschlag "L" eingebaut werden kann. Die Anschraubbohrung 22 befindet sich oberhalb der Mittenachse 53 des Nutensteins 20. Die Ansenkung 24 der Anschraubbohrung 22 ist nicht sichtbar und befindet sich auf der Rückseite.

Die vierte Einbaulage H4 des Nutensteins 20 gemäß Figur 2d ergibt sich dadurch, dass der Nutenstein 20 ausgehend von der Einbaulage H3 in Figur 2c um die horizontale Drehachse 52 in Pfeilrichtung 53 gedreht wird. In der Einbaulage H4 ist der Nutenstein 20 für einen Rechtsanschlag R des Beschlages und für eine Glasdicke von 12 mm geeignet. Die Anschraubbohrung 22 befindet sich unterhalb der Mittenachse 53 des Nutensteins 20. Die Ansenkung 24 der Anschraubbohrung 22 ist nicht sichtbar und befindet sich auf der Rückseite.

Mit Bezug auf die Figuren 3a und 3b besteht der Nutenstein 20 im Wesentlichen aus einem massiven Metallkörper, der sich durch eine zentrische Mittenplatte 21 auszeichnet, die sich über die gesamte Länge des Nutensteins 20 erstreckt, wobei an der Vorderseite der zentrischen Mittenplatte 21 eine vordere Anschlagplatte 21v und an der Hinterseite eine hintere Anschlagsplatte 21h angeformt sind, wobei die Anschlagplatten 21v und 21h etwa gleich dick sind. Somit ist im Bereich der Anschlagplatten 21v, 21h die Dicke der Mittenplatte 21 um die Dicke der Anschlagplatten 21v, 21h vergrößert.

Die jeweiligen Positionen des Nutensteins 20 wurden in die Figuren 3a bis 6b eingetragen.

Somit ergibt sich ein Aufbau, wie er in den Figuren 3a bis 6b näher dargestellt ist, nämlich eine Vorderseite des Nutensteins 20 mit der vorderen Anschlagplatte 21v, die eine exzentrische Anschraubbohrung 22 trägt, die von der Mittenquerlinie 46 um einen Exzenterversatz 47 nach oben versetzt ist. An der Vorderseite trägt die Anschraubbohrung 22 eine Ansenkung 24.

Um die Lage von Basisflächen, Bogenflächen und auch anderen Merkmalen näher zu bezeichnen, sind diese in den Figuren 2a bis 6b jeweils mit dem Zusatz "v" für "vorne", "h" oder "r" für "hinten", "o" für "oben", "u" für "unten", sowie "vo" als Bezeichnung für "vorne oben", "vu" als Bezeichnung für "vorne unten", "ho" als Bezeichnung für "hinten oben" sowie "hu" als Bezeichnung für "hinten unten" bezeichnet.

Die oberen und unteren Stirnseiten der in der Länge kürzeren Anschlagplatten 21v und 21h bilden obere und untere Bogenflächen 26vo, 26vu, die als Anschlagflächen für die Drehlagensicherung des Nutensteins 20 in der Profillängsnut 3 der Profilzarge 2 dienen.

Ferner trägt die Mittenplatte 21 im Bereich ihrer oberen und unteren Stirnseiten ebenfalls obere und untere Bogenflächen 45o und 45u, die spiegelsymmetrisch zueinander ausgebildet sind, um eine Festlegung des Nutensteins in der Profillängsnut 3 der Profilzarge 2 mit Spiel zu ermöglichen.

Die Mittenplatte 21 bildet oberhalb und unterhalb der Anschlagflächen geriffelte Basisflächen 25, insgesamt zwei Basisflächen 25vo, 25vu auf der Vorderseite und zwei Basisflächen 25ho, 25hu auf der Rückseite, die mit einem reibungserhöhenden Profil versehen sind, um so eine Festlegung des Nutensteins 20 an der Innenseite der Profillängsnut zu ermöglichen und eine Verdrehsicherung zu bilden.

Im festgelegten Zustand des Nutensteins 20 dienen diese Basisflächen 25 auch als Rutschsicherung, wobei ein zusätzlicher rutschhemmender Belag oder rutschhemmende Profile auf den Basisflächen 25 vorgesehen werden können.

Aus Figur 3b und Figur 5a ergibt sich, dass die Dicke 48 der Anschlagplatten 21v und 21h groß ist, und das auch die Dicke 49 der Mittelplatte 21 über deren gesamte Länge gleichbleibend ausgebildet ist. Im Übrigen hat der Nutenstein 20 insgesamt eine Breite 50 (siehe Figur 6a).

Erfindungsgemäß ist, dass die Anschraubbohrung 22 exzentrisch versetzt zur geometrischen Mitte des Nutensteins 20 angeordnet ist. Dadurch ist es erstmals möglich, einen Ausgleich für unterschiedliche Glasstärken zu erreichen, indem die gesamte Glasplatte 37 mit ihrem Mittelpunkt in Richtung auf die Anschlagseite des Rahmenprofils 2 verschoben wird.

Die Figuren 3, 4, 5, 6 und 10a bis 13b zeigen die unterschiedlichen Montagesituationen für ein Türband in Form des Scharniers 7 und ein Schließblech 34 bzw. 34', wobei gleiche Teile mit denselben Bezugszeichen versehen sind.

Aus den Figuren 3, 4, 5 und 6 ergibt sich, dass jeweils in Übereinstimmung mit den Figuren 2a bis 2d und angewendet auf ein Türband 7 in der Figur 3 die Einbaulage H1, in der Figur 4 die Einbaulage H2, in der Figur 5 die Einbaulage H3 und in der Figur 6 die Einbaulage H4 des Nutensteins 20 dargestellt ist. Alle Darstellungen der Figuren 3 bis 6 stellen die Montagelage dar und noch nicht die Klemmlage. In der dargestellten Stellung können die Nutensteine 5, 6 in die Profillängsnut 3 der Profilzarge 2 eingelegt werden. Durch Drehung der Nutensteine 20 in der Profillängsnut 3 um 90° in Pfeilrichtung 33 mittels eines Werkzeugs wird die Klemmlage in der Profillängsnut 3 der Profilzarge 2 erreicht.

In den Figuren 10a bis 13b sind die unterschiedlichen Montagesituationen für ein Schließblech 34 dargestellt. Es gibt zwei grundsätzliche Montagepositionen des Schließblechs 24, zum einen mit DIN-Anschlag links und zum anderen mit DIN-Anschlag rechts jeweils für eine Glasdicke von 10mm oder 12mm.

In den Figuren sind die beiden Montagepositionen lediglich für eine Glasdicke von 12 mm dargestellt.

Die Figuren 10a, 10b und 13a, 13b zeigen den DIN-Anschlag links des Schließblechs 34, wobei die Nutensteine 5, 6 in der Einbaulage H4 verwendet werden. In dieser Stellung des Schließblechs 34 verbleibt links eine größere Stegbreite 35b und rechts eine kleinere Stegbreite 35a.

Die um 180° gewendete Stellung des Schließblechs 34' mit DIN-Anschlag rechts ist in den Figuren 11a, 11b, 12a, 12b dargestellt. Durch das Wenden des Schließbleches 34 in die Stellung 34' werden gleichzeitig auch die Stegbreiten 35a und 35b von links nach rechts vertauscht. Die Nutensteine 5, 6 werden nun in der Einbaulage H3 verwendet. In dieser Stellung des Schließblechs 34 verbleibt rechts eine größere Stegbreite 35b und links eine kleinere Stegbreite 35a.

Auf diese Weise kann mit dem gleichen Schließblech 34, 34' sowohl eine Einbaulage mit Linksanschlag als auch eine Einbaulage mit Rechtsanschlag erreicht werden, ohne dass weitere Montageschritte oder Bohrarbeiten erforderlich sind. Ferner ist die Schraubachse 36 für die Festlegung der Befestigungsschrauben 14 in Schraubrichtung 33 dargestellt.

In Figur 7 ist eine perspektivische Darstellung der Festlegung eines Schließblechs 34 in der Einbaulage H4 der Nutensteine 5, 6 gezeigt.

Es ergibt sich im Wesentlichen dieselbe Befestigungssituation, wie sie anhand der Figur 1 beschrieben wurde, wobei nun das Schließblech 34 in der Profillängsnut 3 mit den Nutensteinen 5, 6 festgelegt werden kann.

Das symbolisch dargestellte Sägeblatt dient zur Darstellung, dass die verwendeten Abdeckprofile 12 bei Bedarf abgeschnitten werden können.

In den Figuren 8 und 9 sind die zwei möglichen Einbaulagen des Schließbleches 34 bzw. 34' dargestellt, wobei in der Einbaulage von Figur 8 die Stegbreite 35b auf der linken Seite beispielsweise 4 mm beträgt, und bei der um 180° gewendeten Einbaulage gemäß Figur 9 am Schließblech 34' linksseitig nur noch eine Stegbreite 35a von 2 mm vorhanden ist.

In den Figuren 14, 15, 16, 17, 18 und 19 sind verschiedene Ansichten der Montage des Türbandes 7 in Verbindung mit der ersten Einbaulage H1 der Nutensteine 5, 6 dargestellt. Hierbei wird eine Glasscheibe 37 mit 10mm Dicke verwendet. Das Türband 7 wird mit Linksanschlag montiert.

Figur 14 zeigt gemäß Schnitt A-A in Figur 15 die Positionierung der Nutensteine 5, 6 in der Profillängsnut 3 der Profilzarge 2 in verriegelter Stellung, wobei in Figur 14 das Türblatt 7 der Übersicht halber nicht dargestellt ist. Die sichtbaren Flächen der Nutensteine 5, 6 werden an dem Türblatt 7 befestigt. Zumindest eine Bogenfläche 45o, 45u der Mittenplatte 21 der Nutensteine 5, 6 stützt sich an den Wandungen der Profillängsnut 3 ab und legen die Nutensteine 5, 6 in der Nut 3 fest.

Figur 15 zeigt einen Querschnitt der Befestigungssituation, wobei man die Profilzarge 2, einen der in der Profillängsnut 3 der Profilzarge 2 befestigten Nutensteine 5, 6, den Türbeschlag 7 und eine im Türbeschlag zwischen der Klemmplatte 10 und dem Scharnierarm 9 geklemmte Glasscheibe 37 mit einer Dicke von 10 mm erkennt. Die Glasscheibe 37 ist beispielsweise mittels Schraubbefestigungen 41 zwischen dem Scharnierarm 9 und der Klemmplatte 10 befestigt. Die Figur 15 zeigt auch die Festlegung der Nutensteine 5, 6 in der Profillängsnut 3, wobei die an der Innenseite der Profillängsnut 3 anliegenden Basisflächen 25ho und 25hu der Nutensteine 5, 6 mit reibungserhöhenden Oberflächen eine zusätzliche Lagensicherung ergeben.

In den Figuren 16 und 17 ist die Anordnung der Nutensteine 5,6 am Türbeschlag 7 in der Einbaulage H1 dargestellt, und zwar vor der Festlegung in der Profillängsnut 3, so dass die entscheidenden Symbole "L" für Linksanschlag und "10" für 10 mm Glasstärke auf der Vorderseite der Nutensteine 5, 6 von dem Monteur gut identifizierbar sind.

Die Figur 18 zeigt die Anordnung der Nutensteine 5,6 am Türbeschlag 7 in der Klemmlage der Nutensteine 5, 6. Durch Drehung der Nutensteine 5, 6, von der Position in den Figuren 16, 17 um 90° in Pfeilrichtung 33 nach links ergibt sich die Verriegelungsposition der Nutensteine 5, 6 in den Figuren 18, 19.

In den Figuren 14a, 15a, 16a, 17a, 18a und 19a sind verschiedene Ansichten der Montage des Türbandes 7 in Verbindung mit der dritten Einbaulage H3 der Nutensteine 5, 6 dargestellt. Die Nutensteine 5, 6 sind für einen Linksanschlag des Türbandes 7 und die Glasdicke der Glasscheine 37 von 12 mm konfiguriert. Ansonsten entspricht diese Einbausituation des Türbandes 7 der vorher beschrieben Situation gemäß den Figuren 14-19. Es gilt daher allgemein die Beschreibung der Figuren 14-19.

In den Figuren 14b, 15b, 16b, 17b, 18b und 19b sind verschiedene Ansichten der Montage des Türbandes 7 in Verbindung mit der vierten Einbaulage H4 der Nutensteine 5, 6 dargestellt. Hierbei ist im Türband 7 eine Glasscheibe 37 mit 12 mm Dicke aufgenommen. Das Türband 7 wird mit Rechtsanschlag montiert.

Figur 14b zeigt gemäß Schnitt A-A in Figur 15b die Positionierung der Nutensteine 5, 6 in der Profillängsnut 3 der Profilzarge 2 in verriegelter Stellung, wobei in Figur 14b das Türblatt 7 der Übersicht halber nicht dargestellt ist. Die sichtbaren Flächen der Nutensteine 5, 6 werden an dem Türblatt 7 befestigt. Die Bogenflächen 45o, 45u der Nutensteine 5, 6 stützen sich an den Wandungen der Profillängsnut 3 ab und legen die Nutensteine 5, 6 in der Nut 3 fest.

Figur 15b zeigt einen Querschnitt der des Befestigungssituation, wobei man die Profilzarge 2, einen der in der Profillängsnut 3 der Profilzarge 2 befestigten Nutensteine 5, 6, den Türbeschlag 7 und eine im Türbeschlag zwischen der Klemmplatte 10 und dem Scharnierarm 9 geklemmte Glasscheibe 37 mit einer Dicke von 12 mm erkennt. Die Glasscheibe 37 ist beispielsweise mittels Schraubbefestigungen 41 zwischen dem Scharnierarm 9 und der Klemmplatte 10 befestigt. Die Figur 15b zeigt auch die Festlegung des Nutensteins 5, 6 in der Profillängsnut 3, wobei die an der Innenseite der Profillängsnut 3 anliegenden Basisflächen 25ho und 25hu der Nutensteine 5, 6 mit reibungserhöhenden Oberflächen eine zusätzliche Lagensicherung ergeben.

In den Figuren 16b und 17b ist die Anordnung der Nutensteine 5,6 am Türbeschlag 7 in der Einbaulage H4 dargestellt, und zwar vor der Festlegung in der Profillängsnut 3, so dass die entscheidenden Symbole "R" für Linksanschlag und "12" für 12 mm Glasstärke auf der Vorderseite der Nutensteine 5, 6 von dem Monteur gut identifizierbar sind.

Die Figur 18b zeigt die Anordnung der Nutensteine 5,6 am Türbeschlag 7 in der Klemmlage der Nutensteine 5, 6. Durch Drehung der Nutensteine 5, 6 ausgehend von der Position in den Figuren 16, 17 um 90° in Pfeilrichtung 33 nach links ergibt sich die Verriegelungsposition der Nutensteine 5, 6 in den Figuren 18, 19.

In den Figuren 14c, 15c, 16c, 17c, 18c und 19c sind verschiedene Ansichten der Montage des Türbandes 7 in Verbindung mit der zweiten Einbaulage H2 der Nutensteine 5, 6 dargestellt. Die Nutensteine 5, 6 sind für einen Rechtsanschlag des Türbandes 7 und die Glasdicke der Glasscheibe 37 von 10 mm konfiguriert. Ansonsten entspricht diese Einbausituation des Türbandes 7 der vorher beschrieben Situation gemäß den Figuren 14b-19b. Es gilt daher allgemein die Beschreibung der Figuren 14b-19b.

In den Figuren 20, 21, 22, 23 und 24 ist die Montage eines Schließbleches 34 an der Profilzarge 2 dargestellt. Hierfür werden zwei Nutensteine 5, 6 in der Einbaulage H4 verwendet, wenn es darum geht, eine Stegbreite 35a von beispielsweise 2 mm zu erreichen, um einen bestimmten Anschlag der Schließvorrichtung einer 12 mm dicken Glastrennwand 37 an diesem Schließblech 34 zu ermöglichen.

Das Schließblech wird gemäß Figur 21 mit einer Befestigungsschraube 14 mit jeweils einem Nutenstein 5, 6 verbunden, wobei die Befestigungsschraube 14 die Anschraubbohrung 22 des Nutensteins 5, 6 eingreift und gleichzeitig der Nutenstein durch Drehung um 90° in der Profillängsnut 3 der Profilzarge 2 verriegelt wird.

Figur 23 zeigt die Nutensteine 5, 6 mit dem daran befestigten Schließblech 34 in Einführstellung zur Einführung in die Profillängsnut 3 der Profilzarge 2.

Figur 24 zeigt die Nutensteine 5, 6 mit dem daran befestigten Schließblech 34 in verriegelter Stellung.

In Figur 22 ist ein Querschnitt durch die Profilzarge 2 im Bereich eines Nutensteins 5, 6 in verriegelter Stellung des Nutensteins 5, 6 dargestellt.

In analoger Weise ist in den Figuren 20a, 21a, 22a, 23a und 24a die Situation in der Einbaulage H3 der Nutensteine 5, 6 für das gleiche Schließblech 34 dargestellt, welches im Vergleich zu den Figuren 20-24 um 180° gewendet wurde und somit eine vergrößerte Stegbreite 35b von beispielsweise 4 mm für eine 10 mm starke Glastrennwand 37 erreicht wird. Ansonsten gelten für die gleichen Teile die gleichen Bezugszeichen.

In den Figuren 20b, 21b, 22b, 23b und 24b ist eine ähnliche Situation wie in den vorhergehenden Figuren dargestellt, wobei der Unterschied darin liegt, dass eine 10 mm dicke Glasscheibe 37 mit Linksanschlag eingebaut wird, während gemäß den vorhergehenden Figuren eine 10 mm dicke Glasscheibe 37 im Rechtsanschlag eingebaut wird.

Auf den Figuren 20c, 21c, 22c, 23c und 24c ist dargestellt, dass dasselbe Schließblech 34 im DIN-Linksanschlag in Verbindung mit einer 12 mm starken Glasscheibe 37 im Profilrahmen 2 eingebaut wird. Ansonsten gelten für die gleichen Teile die gleichen Bezugszeichen.

Vorteil des vorliegend beschriebenen Montagesystems ist demnach, dass durch die besondere Ausbildung der Nutensteine 5, 6 es nunmehr möglich ist, insgesamt vier verschiedene Montageeinbaupositionen zu erreichen und somit unterschiedlich dicke Füllplatten 37 mit unterschiedlichem Links- oder Rechtsanschlag ohne weitere Bohr- oder Montagearbeiten montiert werden können.

Die gleichen Vorteile gelten auch für das für die Montage des hier beschriebenen Schließblechs 34.

### Zeichnungslegende

- 1: Montagesystem
- 2: Profilzange
- 3: Profillängsnut
- 4: Einführschlitz
- 5: Nutenstein
- 6: Nutenstein
- 7: Türband, Scharnier
- 8: Grundplatte
- 9: Scharnierarm
- 10: Klemmplatte
- 11: Klemmspalt
- 12: Abdeckprofil
- 13: Werkzeug
- 14: Befestigungsschraube
- 15: Reibungsbelag
- 16: Hohlkammerdichtung
- 17: Längsnut
- 18: Montagelage
- 19: Montagelage
- 20: Nutenstein
- 21: Mittenplatte
- 21v: vordere Anschlagplatte
- 21h: hintere Anschlagplatte
- 22: Anschraubbohrung
- 23a: Symbol
- 23b: Symbol
- 23c: Symbol
- 23ar: Symbol rückseitig
- 23br: Symbol rückseitig
- 24: Ansenkung
- 25v: Basisfläche 25vo, 25vu
- 25h: Basisfläche rückseitig 25ho, 25hu
- 26v: Bogenfläche vorne 26vo, 26vu
- 26h: Bogenfläche unten 26ho, 26hu

- 33: Schraubrichtung
- 34: Schließblech 34'
- 35: Stegbreite a, b
- 36: Schraubachse
- 37: Glasscheibe
- 38: Dicke (von 37) - 10 mm
- 39: Dicke (von 37) - 12 mm
- 40: Drehachse
- 41: Schraubbefestigung
- 42: Referenzmaß
- 43: Referenzmaß
- 44: Schließöffnung
- 45: Bogenfläche 45o, 45u
- 46: Mittenquerlinie
- 47: Exzenterversatz
- 48: Dicke (von Anschlagplatte)
- 49: Dicke (von Mittelplatte 21)
- 50: Breite (von 20)
- 51: Wendeachse (von 20 um 180°)
- 52: Drehachse (in Querrichtung von 20 um 180°)
- 53: Pfeilrichtung (Drehachse 52)
- 54: Pfeilrichtung (Wendeachse 51)

- H1: Einbaulage
- H2: Einbaulage
- H3: Einbaulage
- H4: Einbaulage

## Patentansprüche

1. Beschlag (7, 34, 34') mit mindestens einem Nutenstein für ein Trennwandsystem, wobei das Trennwandsystem Trennwände (37) und Profilzargen (2) umfasst, und in den Profilzargen (2) jeweils mindestens eine in vertikaler Richtung verlaufende Profillängsnut (3) zur Aufnahme des mindestens einen Nutensteins (5, 6, 20) eingearbeitet ist, wobei der mindestens eine Nutenstein (5, 6, 20) eine Anschraubbohrung (22) zur Befestigung des Beschlages (7, 34, 34') in der Profillängsnut (3), eine zentrische Mittenachse (52) und eine Längsachse (51) aufweist, wobei die Anschraubbohrung (22) bezüglich der zentrischen Mittenachse (52) des Nutensteins (5, 6, 20) exzentrisch versetzt ist **dadurch gekennzeichnet, dass** der Nutenstein (5, 6, 20) derart ausgebildet ist, dass er durch Drehen um 180° um die zentrische Mittenachse (52) und/oder durch Wenden um 180° um die Längsachse (51) in vier verschiedenen Einbaulagen (H1, H2, H3, H4) in die Profillängsnut (3) einsetzbar und durch Drehung um 90° um die Achse der exzentrischen Anschraubbohrung (22) darin festlegbar ist, so dass je nach Einbaulage (H1, H2, H3, H4) des Nutensteins (5, 6, 20) der mit dem Nutenstein (5, 6, 20) montierte Beschlag (7, 34, 34') in verschiedenen Einbaupositionen (L, R) und/oder für die Aufnahme unterschiedlich dicker Trennwände (37) an der Profilzarge (2) festlegbar ist.

2. Beschlag nach Anspruch 1, **dadurch gekennzeichnet,**
**dass** eine erste Einbaulage (H1) des Nutensteines (5, 6, 20) für einen Linksanschlag des Beschlages (7, 34, 34') und eine Verwendung einer Trennwand (37) mit einer ersten Dicke vorgesehen ist,
**dass** eine zweite Einbaulage (H2) des Nutensteines (5, 6, 20) für einen Rechtsanschlag des Beschlages (7, 34, 34') und eine Verwendung einer Trennwand (37) mit einer ersten Dicke vorgesehen ist,
**dass** eine dritte Einbaulage (H3) des Nutensteines (5, 6, 20) für einen Linksanschlag des Beschlages (7, 34, 34') und eine Verwendung einer Trennwand (37) mit einer zweiten Dicke vorgesehen ist, und
**dass** eine vierte Einbaulage (H4) des Nutensteines (5, 6, 20) für einen Rechtsanschlag des Beschlages (7, 34, 34') und eine Verwendung einer Trennwand (37) mit einer zweiten Dicke vorgesehen ist.

3. Beschlag nach einem der Ansprüche 1 oder 2, **dadurch gekennzeichnet, dass** die Anschraubbohrung (22) auf einer Seite eine Ansenkung (24) aufweist.

4. Beschlag nach einem der Ansprüche 1 bis 3, **dadurch gekennzeichnet, dass** sich in der ersten Einbaulage (H1) des Nutensteins (5, 6, 20) die exzentrische Anschraubbohrung (22) in einer oberen Lage befindet und die Ansenkung (24) der Anschraubbohrung (22) sichtbar ist.

5. Beschlag nach einem der Ansprüche 1 bis 4, **dadurch gekennzeichnet, dass** der Nutenstein (5, 6, 20) durch eine Drehung um 180° um die zentrische Mittenachse (52) von der ersten Einbaulage (H1) in die zweite Einbaulage (H2) überführbar ist, wodurch die exzentrische Anschraubbohrung (22) von einer oberen Lage in eine untere Lage gelangt.

6. Beschlag nach einem der Ansprüche 1 bis 5, **dadurch gekennzeichnet, dass** der Nutenstein (5, 6, 20) durch Wenden um 180° um seine Längsachse (51) von der ersten Einbaulage (H1) in die dritte Einbaulage (H3) überführbar ist, wobei die exzentrische Anschraubbohrung (22) sich in einer oberen Lage befindet und die Ansenkung (24) der exzentrischen Anschraubbohrung (22) nicht sichtbar ist.

7. Beschlag nach einem der Ansprüche 1 bis 6, **dadurch gekennzeichnet, dass** der Nutenstein (5, 6, 20) durch eine Drehung um 180° um die zentrische Mittenachse (52) von der dritten Einbaulage (H3) in die vierte Einbaulage (H4) überführbar ist, wodurch die exzentrische Anschraubbohrung (22) von einer oberen Lage in eine untere Lage gelangt und die Ansenkung (24) der Anschraubbohrung (22) nicht sichtbar ist.

8. Beschlag nach einem der Ansprüche 1 bis 7, **dadurch gekennzeichnet, dass** der Nutenstein (5, 6, 20) durch eine Befestigungsschraube (14) mit dem Beschlag (7, 34, 34') verbindbar ist, welche durch die exzentrische Anschraubbohrung (22) des Nutensteins (5, 6, 20) hindurchgreift.

9. Beschlag nach einem der Ansprüche 1 bis 8, **dadurch gekennzeichnet, dass** die Befestigungsschraube (14) reibungserhöhende Mittel (15) zur Mitnahme und Drehung des Nutensteins (5, 6, 20) aufweist.

10. Beschlag nach einem der Ansprüche 1 bis 9, **dadurch gekennzeichnet, dass** der Nutenstein (5, 6, 20) eine zentrische Mittenplatte (21) aufweist, die über die gesamte Länge eine einheitliche Dicke aufweist, und dass an einer Vorder- und Rückseite dieser Mittenplatte jeweils eine Anschlagplatte (21v, 21h) angeformt ist.

11. Beschlag nach einem der Ansprüche 1 bis 10, **dadurch gekennzeichnet, dass** die Anschlagplatten (21v, 21h) in Längsrichtung der Mittenplatte (21) versetzt zur Mitte angeordnet sind.

12. Beschlag nach einem der Ansprüche 1 bis 11, **dadurch gekennzeichnet, dass** die exzentrische Anschraubbohrung (22) versetzt zur Längsmitte der Anschlagplatten (21v, 21h) angeordnet ist.

13. Beschlag nach einem der Ansprüche 1 bis 12, **dadurch gekennzeichnet, dass** Basisflächen (25vo, 25vu, 25ho, 25hu) auf der Vorderseite und der Rückseite der Mittenplatte (21) des Nutensteins (5, 6, 20) zumindest teilweise mit reibungserhöhenden Strukturen und/oder einem reibungserhöhenden Belag versehen sind.

14. Beschlag nach einem der Ansprüche 1 bis 13, **dadurch gekennzeichnet, dass** obere und untere Stirnseiten der zentrischen Mittenplatte (21) des Nutensteins (5, 6, 20) Bogenflächen (45o, 45u) zur Abstützung und Verriegelung des Nutensteins (5, 6, 20) in der Profillängsnut (3) der Profilzarge (2) aufweist.

15. Beschlag nach einem der Ansprüche 1 bis 14, **dadurch gekennzeichnet, dass** obere und untere Stirnseiten der Anschlagplatten (21v, 21h) des Nutensteins (5, 6, 20) Bogenflächen (26vo, 26vu, 26ho, 26hu) zur Anlage und Drehlagenfixierung des Nutensteins (5, 6, 20) an den diesen Bogenflächen (26vo, 26vu, 26ho, 26hu) zugewandten Kanten der Profilzarge (2) aufweisen.

## Claims

1. Fitting (7, 34, 34') with at least one sliding block for a partition wall system, wherein the partition wall system comprises partition walls (37) and profile frames (2), and respectively at least one profile longitudinal groove (3) running in vertical direction is incorporated in the profile frames (2) to receive the at least one sliding block (5, 6, 20), wherein the at least one sliding block (5, 6, 20) has a screw-down bore (22) for attaching the fitting (7, 34, 34') in the profile longitudinal groove (3), a concentric central axis (52) and a longitudinal axis (51), wherein the screw-down bore (22) is offset eccentrically with respect to the concentric central axis (52) of the sliding block (5, 6, 20), **characterised in that** the sliding block (5, 6, 20) is designed such that it is insertable into the profile longitudinal groove (3) by rotation through 180° about the concentric central axis (52) and/or by turning through 180° about the longitudinal axis (51) in four different installation positions (H1, H2, H3, H4) and is fixable therein by rotation through 90° about the axis of the eccentric screw-down bore (22) so that, depending on installation position (H1, H2, H3, H4) of the sliding block (5, 6, 20), the fitting (7, 34, 34') mounted with the sliding block (5, 6, 20) is fixable to the profile frame (2) in different installation positions (L, R) and/or for receiving partition walls (37) of different thickness.

2. Fitting according to claim 1, **characterised in that** a first installation position (H1) of the sliding block (5, 6, 20) is provided for a left-hand stop of the fitting (7, 34, 34') and use of a partition wall (37) with a first thickness, **in that** a second installation position (H2) of the sliding block (5, 6, 20) is provided for a right-hand stop of the fitting (7, 34, 34') and use of a partition wall (37) with a first thickness, **in that** a third installation position (H3) of the sliding block (5, 6, 20) is provided for a left-hand stop of the fitting (7, 34, 34') and use of a partition wall (37) with a second thickness, and **in that** a fourth installation position (H4) of the sliding block (5, 6, 20) is provided for a right-hand stop of the fitting (7, 34, 34') and use of a partition wall (37) with a second thickness.

3. Fitting according to one of claims 1 or 2, **characterised in that** the screw-down bore (22) has a countersink (24) on one side.

4. Fitting according to one of claims 1 to 3, **characterised in that** in the first installation position (H1) of the sliding block (5, 6, 20), the eccentric screw-down bore (22) is located in an upper position and the countersink (24) of the screw-down bore (22) is visible.

5. Fitting according to one of claims 1 to 4, **characterised in that** the sliding block (5, 6, 20) is transferrable from the first installation position (H1) to the second installation position (H2) by rotation through 180° about the concentric central axis (52), whereby the eccentric screw-down bore (22) goes from an upper position to a lower position.

6. Fitting according to one of claims 1 to 5, **characterised in that** the sliding block (5, 6, 20) is transferrable from the first installation position (H1) to the third installation position (H3) by turning through 180° about its longitudinal axis (51), wherein the eccentric screw-down bore (22) is located in an upper position and the countersink (24) of the eccentric screw-down bore (22) is not visible.

7. Fitting according to one of claims 1 to 6, **characterised in that** the sliding block (5, 6, 20) is transferrable from the third installation position (H3) to the fourth installation position (H4) by rotation through 180° about the concentric central axis (52), whereby the eccentric screw-down bore (22) goes from an upper position to a lower position and the countersink (24) of the screw-down bore (22) is not visible.

8. Fitting according to one of claims 1 to 7, **characterised in that** the sliding block (5, 6, 20) is connectable to the fitting (7, 34, 34') by an attachment screw (14) which engages through the eccentric screw-down bore (22) of the sliding block (5, 6, 20).

9. Fitting according to one of claims 1 to 8, **characterised in that** the attachment screw (14) has friction-increasing means (15) to lock and rotate the sliding block (5, 6, 20).

10. Fitting according to one of claims 1 to 9, **characterised in that** the sliding block (5, 6, 20) has a concentric central plate (21) which has a uniform thickness over the entire length, and **in that** respectively a stop plate (21v, 21h) is integrally moulded on a front side and rear side of this central plate.

11. Fitting according to one of claims 1 to 10, **characterised in that** the stop plates (21v, 21h) are arranged offset to the centre in the longitudinal direction of the central plate (21).

12. Fitting according to one of claims 1 to 11, **characterised in that** the eccentric screw-down bore (22) is arranged offset to the longitudinal centre of the stop plates (21v, 21h).

13. Fitting according to one of claims 1 to 12, **characterised in that** base surfaces (25vo, 25vu, 25ho, 25hu) on the front side and the rear side of the central plate (21) of the sliding block (5, 6, 20) are provided at least partly with friction-increasing structures and/or a friction-increasing covering.

14. Fitting according to one of claims 1 to 13, **characterised in that** upper and lower endface sides of the concentric central plate (21) of the sliding block (5, 6, 20) has arc surfaces (45o, 45u) to support and lock the sliding block (5, 6, 20) in the profile longitudinal groove (3) of the profile frame (2).

15. Fitting according to one of claims 1 to 14, **characterised in that** upper and lower endface sides of the stop plates (21v, 21h) of the sliding block (5, 6, 20) have arc surfaces (26vo, 26vu, 26ho, 26hu) to support and fix the rotary position of the sliding block (5, 6, 20) on the edges of the profile frame (2) facing these arc surfaces (26vo, 26vu, 26ho, 26hu).

## Revendications

1. Ferrure (7, 34, 34') avec au moins un coulisseau pour un système de cloisons, dans laquelle le système de cloisons comprend des cloisons (37) et des châssis profilés (2), et dans les châssis profilés (2) est ménagée respectivement au moins une rainure longitudinale profilée (3) s'étendant dans la direction verticale pour recevoir le au moins un coulisseau (5, 6, 20), dans laquelle le au moins un coulisseau (5, 6, 20) présente un perçage de vissage (22) pour la fixation de la ferrure (7, 34, 34') dans la rainure longitudinale profilée (3), un axe médian centré (52) et un axe longitudinal (51), dans laquelle le perçage de vissage (22) est décalé de manière excentrée par rapport à l'axe médian centré (52) du coulisseau (5, 6, 20), **caractérisée en ce que** le coulisseau (5, 6, 20) est formé de telle sorte qu'il soit apte à être inséré par rotation à 180° autour de l'axe médian centrée (52) et/ou par retournement à 180° autour de l'axe longitudinal (51) dans quatre positions d'installation différentes (H1, H2, H3, H4) dans la rainure longitudinale profilée (3) et soit apte à être immobilisé par rotation à 90° autour de l'axe du perçage de vissage (22) dans celui-ci, de sorte que suivant la position d'installation (H1, H2, H3, H4) du coulisseau (5, 6, 20), la ferrure (7, 34, 34') montée avec le coulisseau (5, 6, 20) soit apte à être immobilisée dans différentes positions d'installation (L, R) et/ou pour la réception de cloisons (37) d'épaisseurs différentes sur le châssis profilé (2).

2. Ferrure selon la revendication 1, **caractérisée**
**en ce qu'**il est prévu une première position d'installation (H1) du coulisseau (5, 6, 20) pour une butée gauche de la ferrure (7, 34, 34') et une utilisation d'une cloison (37) avec une première épaisseur,
**en ce qu'**il est prévu une deuxième position d'installation (H2) du coulisseau (5, 6, 20) pour une butée droite de la ferrure (7, 34, 34') et une utilisation d'une cloison (37) avec une première épaisseur,
**en ce qu'**il est prévu une troisième position d'installation (H3) du coulisseau (5, 6, 20) pour une butée gauche de la ferrure (7, 34, 34') et une utilisation d'une cloison (37) avec une deuxième épaisseur, et
**en ce qu'**il est prévu une quatrième position d'installation (H4) du coulisseau (5, 6, 20) pour une butée droite de la ferrure (7, 34, 34') et une utilisation d'une cloison (37) avec une deuxième épaisseur.

3. Ferrure selon l'une des revendications 1 ou 2, **caractérisée en ce que** le perçage de vissage (22) présente sur un côté une fraisure (24).

4. Ferrure selon l'une des revendications 1 à 3, **caractérisée en ce que** dans la première position d'installation (H1) du coulisseau (5, 6, 2), le perçage de vissage excentré (22) se trouve dans une position haute et la fraisure (24) du perçage de vissage (22) est visible.

5. Ferrure selon l'une des revendications 1 à 4, **caractérisée en ce que** le coulisseau (5, 6, 20) est apte à passer de la première position d'installation (H1) à la deuxième position d'installation (H2) par une rotation de 180° autour de l'axe médian centré (52), moyennant quoi le perçage de vissage excentré (22) arrive d'une position haute à une position basse.

6. Ferrure selon l'une des revendications 1 à 5, **caractérisée en ce que** le coulisseau (5, 6, 20) est apte à passer de la première position d'installation (H1) du coulisseau (5, 6, 20) à la troisième position d'installation (H3) par retournement de 180° autour de son axe longitudinal (51), moyennant quoi le perçage de vissage excentré (22) se trouve dans une position haute et la fraisure (24) du perçage de vissage excentré (22) n'est pas visible.

7. Ferrure selon l'une des revendications 1 à 6, **caractérisée en ce que** le coulisseau (5, 6, 20) est apte à passer de la troisième position d'installation (H3) du coulisseau (5, 6, 20) à la quatrième position d'installation (H4) par une rotation de 180° autour de l'axe médian centré (52), moyennant quoi le perçage de vissage excentré (22) arrive d'une position haute à une position basse et la fraisure (24) du perçage de vissage (22) n'est pas visible.

8. Ferrure selon l'une des revendications 1 à 7, **caractérisée en ce que** le coulisseau (5, 6, 20) est apte à être relié à la ferrure (7, 34, 34') par une vis de fixation (14) qui passe à travers le perçage de vissage excentré (22) du coulisseau (5, 6, 20).

9. Ferrure selon l'une des revendications 1 à 8, **caractérisée en ce que** la vis de fixation (14) comporte des moyens augmentant le frottement (15) pour l'entraînement et la rotation du coulisseau (5, 6, 20).

10. Ferrure selon l'une des revendications 1 à 9, **caractérisée en ce que** le coulisseau (5, 6, 20) comporte une plaque médiane centrée (21) qui présente sur toute la longueur une épaisseur uniforme, et **en ce que** sur un côté avant et un côté arrière de cette plaque médiane est rapportée respectivement une plaque de butée (21v, 21h).

11. Ferrure selon l'une des revendications 1 à 10, **caractérisée en ce que** les plaques de butée (21v, 21h) sont disposées en étant décalées dans la direction longitudinale de la plaque médiane (21) par rapport au milieu.

12. Ferrure selon l'une des revendications 1 à 11, **caractérisée en ce que** le perçage de vissage excentré (22) est disposé en étant décalé par rapport au centre longitudinal des plaques de butée (21v, 21h).

13. Ferrure selon l'une des revendications 1 à 12, **caractérisée en ce que** des surfaces de base (25vo, 25vu, 25ho, 25hu) sur le côté avant et le côté arrière de la plaque de butée (21v, 21h) du coulisseau (5, 6, 20) sont au moins partiellement pourvues de structures augmentant le frottement et/ou d'un revêtement augmentant le frottement.

14. Ferrure selon l'une des revendications 1 à 13, **caractérisée en ce que** des côtés frontaux supérieur et inférieur de la plaque de butée centrée (21) du coulisseau (5, 6, 20) comportent des surfaces courbes (45o, 45u) pour l'appui et le verrouillage du coulisseau (5, 6, 20) dans la rainure longitudinale profilée (3) du châssis profilé (2).

15. Ferrure selon l'une des revendications 1 à 14, **caractérisée en ce que** des côtés frontaux supérieur et inférieur des plaques de butée (21v, 21h) du coulisseau (5, 6, 20) comportent des surfaces courbes (26v, 26vu, 26ho, 26hu) pour l'application et la fixation en position de rotation du coulisseau (5, 6, 20) contre les arêtes du châssis profilé (2) tournées vers ces surfaces courbes (26vo, 26vu, 26ho, 26hu).
